# EUROPEAN PATENT APPLICATION

(11) **EP 2 590 403 A1**
(43) Date of publication of application: **08.05.2013**
(21) Application number: 13153713.6
(22) Date of filing: 19.11.2008
(51) Int. Cl.: H04N 5/445, H04N 7/16, H04N 7/173, H04N 21/61, H04N 21/431, H04N 21/478, H04N 21/482, H04N 21/485

(54) **Display apparatus and control method thereof**

(30) Priority: 10.12.2007 KR 20070127713
(62) Divisional of application: 08169419.2
(71) Applicant: Samsung Electronics Co., Ltd., Gyeonggi-do 443-742 (KR)
(72) Inventor: Lee, Dong-heon, Seoul (KR); Kwon, Yong-hwan, Gyeonggi-do (KR); Lee, Sang-hee, Seoul (KR); Kim, Won-il, Gyeonggi-do (KR)
(74) Representative: Fearnside, Andrew Simon

(57) **Abstract**

A display apparatus which has a display unit (30), the display apparatus includes: a communication unit (10) which receives contents from an external server (200); a UI (user interface) generator which generates UI information; and a controller (70) which controls the UI generator (50) to display the UI information about setting an initial screen of the contents supplied by the external server (200) on the display unit (30) if the display apparatus is connected to the external server (200).

## Description

### BACKGROUND OF INVENTION

### Field of Invention

Apparatuses and methods consistent with the present invention relate to a display apparatus and a control method thereof, and more particularly, to a display apparatus which receives contents from an Internet server.

### Description of the Related Art

A display apparatus processes and displays an inputted image signal. The inputted image signal includes an external image signal from a source such as a digital versatile disk (DVD) as well as a broadcasting signal.

With widespread high speed Internet networks, IP (internet protocol) broadcasting services have commenced and an IP TV (internet protocol television) system has been provided. The IP TV system provides contents including movies and news to a display device according to a user's demand such as VOD (video on demand).

More specifically, the VOD service is provided by two way communication under which contents are compressed and stored in a video server and a stored video is received through a high speed communication network from the video server when a user requests a video.

It has become a major issue to change and set contents supplied in a display environment providing two way communication, according to a user's preferences.

### SUMMARY OF THE INVENTION

Accordingly, it is an aspect of the present invention to provide a display apparatus which allows a user to easily reconfigure an initial screen of contents displayed on a display unit, and a control method thereof.

Also, it is another aspect of the present invention to provide a display apparatus which supports UI (user interface) information to reconfigure supplied contents, and a control method thereof.

According to the present invention there is provided an apparatus and method as set forth in the appended claims. Other features of the invention will be apparent from the dependent claims, and the description which follows.

According to an aspect of the invention there is provided a display apparatus which has a display unit, the display apparatus comprising: a communication unit which receives contents from an external server; a UI (user interface) generator which generates UI information; and a controller which controls the UI generator to display the UI information relating to setting an initial screen of the contents supplied by the external server on the display unit if the display apparatus is connected to the external server.

The display apparatus may further comprise a storage unit which stores therein initial screen information changed through the UI information.

The display apparatus may further comprise an image processor which changes the content initial screen based on the stored initial screen information.

The UI information may comprise a position changing window to change a display position of contents.

The UI information may comprise a category selecting window to select a specific category of the content to be displayed.

The external server may supply a preview window with respect to contents, and the UI information may comprise a preview selecting window to select contents displayed in the preview window.

The UI information may comprise a content adding/removing window to add or remove contents displayed on the content initial screen.

If a plurality of content initial screens having different formats may be supplied from the external server, the content initial screens comprise an initial screen format window to select one of the formats.

The display apparatus may further comprise a user input unit to set the content initial screen, wherein the image processor changes a size of the content initial screen according to a control signal if the control signal is outputted through the user input unit to change the size of the content initial screen.

The image processor may change a display area of the contents according to a control signal if the control signal is outputted through the user input unit to change the display area of the contents.

According to another aspect of the invention there is provided a control method of a display apparatus which receives contents from an external server, the control method comprising: receiving a control signal to display an initial screen changing window changing a content initial screen; displaying the initial screen changing window; storing changed initial screen information; and changing the content initial screen based on the initial screen information.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a control block diagram of a display apparatus according to a first exemplary embodiment of the present invention;
FIG. 2 illustrates an initial screen of contents according to the first exemplary embodiment of the present invention;
FIG. 3 illustrates a position changing window according to the first exemplary embodiment of the present invention;
FIG. 4 illustrates another position changing window according to the first exemplary embodiment of the present invention;
FIG. 5 illustrates a category selecting window according to the first exemplary embodiment of the present invention;
FIG. 6 illustrates an initial screen and a preview selecting window according to a second exemplary embodiment of the present invention;
FIG. 7 illustrates a content adding/removing window according to a third exemplary embodiment of the present invention;
FIG. 8 illustrates an initial screen format window according to a fourth exemplary embodiment of the present invention; and
FIG. 9 is a control flowchart to describe a control method of the display apparatus according to the present invention.

### DETAILED DESCRIPTION OF EXEMPLARY EMBODIMENTS OF THE INVENTION

Reference will now be made in detail to the embodiments of the present invention, examples of which are illustrated in the accompanying drawings, wherein like reference numerals refer to like elements throughout. The embodiments are described below so as to explain the present invention by referring to the figures.

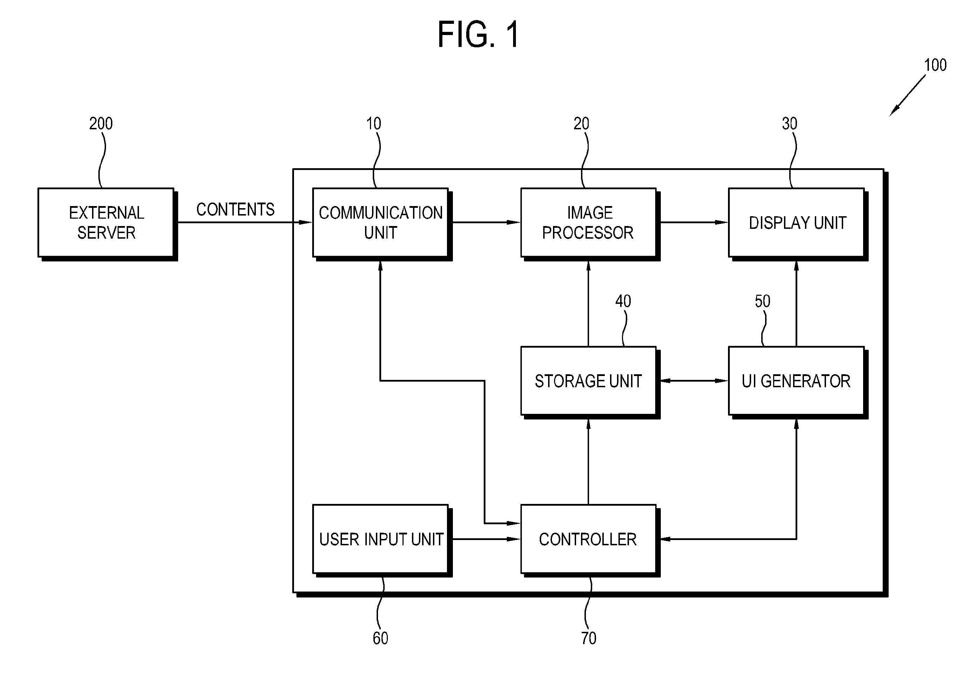

FIG. 1 is a control block diagram of a display apparatus according to a first exemplary embodiment of the present invention.

As shown therein, a display apparatus 100 includes a communication unit 10, an image processor 20, a display unit 30, a storage unit 40, a UI (user interface) generator 50, a user input unit 60, and a controller 70 to control the foregoing elements. The display apparatus 100 according to the present invention may include an IP (internet protocol) TV which provides a two way communication. The display apparatus 100 may further include a tuner (not shown) to receive a broadcasting signal and a connector (not shown) to receive an image source from a storage medium.

An external server 200 supplies contents to the display apparatus 100. The external server 200 may include a buffer to convert contents into consecutive bit streams, a broadband transmission device, a subscriber transmission network interface device and the like. The external server 200 may include a video server of a terrestrial wave broadcaster, a regional broadcaster, a cable broadcaster and the like. The contents transmitted by the external server 200 include still and moving images, visual information such as text and symbols and auditory information such as audio or voice. Such contents are received from the external server 200 according to a predetermined order. If a user accesses the external server 200 initially, contents are displayed as a specific initial screen on the display unit 30.

The communication unit 10 receives contents from the external server 200, and transmits and receives information about the contents to and from the external server 200. The communication unit 10 according to the present invention may use an asymmetric digital subscriber line (ADSL).

The image processor 20 processes contents received from the outside to be displayed on the display unit 30. For example, the image processor 20 performs an A/D converting function converting various inputted image signals into digital image signals in predetermined formats, a digital decoding function, a scaling function scaling a vertical frequency, resolution and a picture ratio of digital image signals and/or analog image signals according to an output standard of the display unit 30 (to be described later), and a predetermined format converting function. The image processor 20 changes an initial screen of contents received from the external server 200 according to the control of the controller 70.

The display unit 30 displays thereon contents and UI information generated by the UI generator 50. The display unit 30 may include a liquid crystal display (LCD) panel, an organic light emitting diode (OLED) including an organic light emitting element or a plasma display panel (PDP).

The storage unit 40 stores therein initial screen information of contents changed through UI information (to be described later). As described above, if received initially, contents are displayed on the display unit 30 according to a specific arrangement. A user may change an initial screen of the contents by using the UI information. Position information or category information of the changed contents are defined as initial screen information. The storage unit 40 may include, for example, a flash memory, which is a kind of an electrically erasable and programmable read only memory (EEPROM).Or, the storage unit 40 may include, for example, an additional chip module or a memory within the controller 70 to perform a control function.

The user input unit 60 generates a selection signal to change or reconfigure the initial screen of the contents and outputs various control signals according to a user's manipulation. To select such a function, the user input unit 60 may include an additional hot key or a touch pad, or a remote controller to remotely communicate with the display apparatus 100. The hot key or the touch pad as the user input unit 60 may be provided in an external frame of the display apparatus 100. Meanwhile, the touch pad may be provided as a touch panel on the display unit 30. The user input unit 60 may include a general input unit such as a keyboard or a mouse.

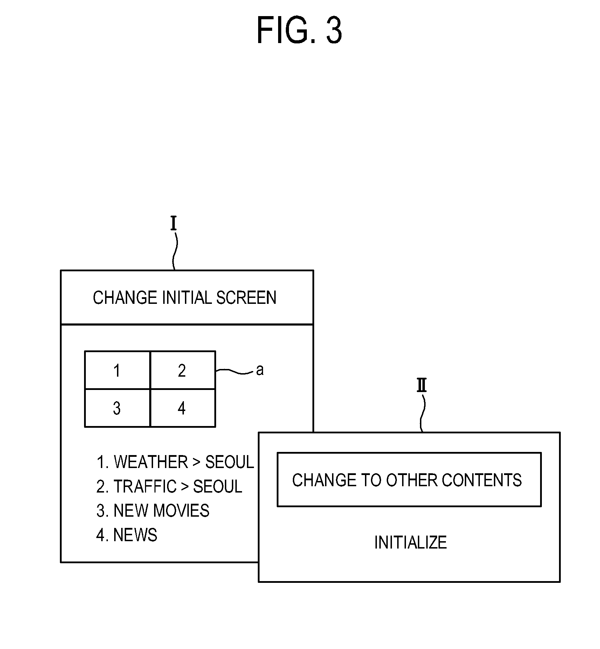

The UI generator 50 generates various UI information to change the initial screen of the contents and displays the information on the display unit 30 according to a control of the controller 70. The UI information will be described with reference to FIGS. 3 to 6.

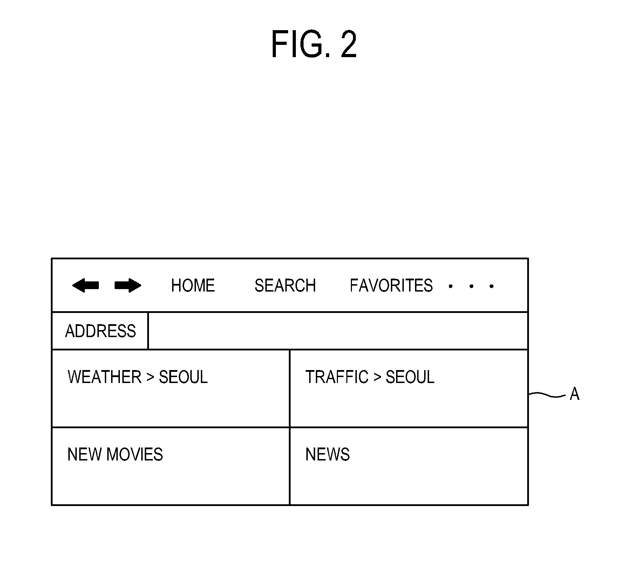

When the display apparatus 100 is connected to the external server 200 through the communication unit 10, the controller 70 controls the UI generator 50 to generate UI information to thereby change the initial screen of the contents supplied by the external server 200. FIG. 2 illustrates an initial screen A of contents supplied by the external server 200. The initial screen A includes an arrow← to move to a previous screen in an upper part, another arrow → to move to a next screen, a home item to display the initial screen, a search item to search contents and a favorites item to provide favorites. The initial screen A includes an address bar of a website supplying the contents. A lower part of the address bar is divided into four sections as shown therein to display content information about categories of weather, traffic, new movies and news, respectively. The weather and traffic categories include weather in Seoul and traffic in Seoul as specific categories.

If a selection signal is inputted through the user input unit 60 to change the initial screen A after the initial screen A is displayed, the UI generator 50 generates various initial screen changing windows to be displayed on the display unit 30. A user may select a menu of the displayed initial screen changing windows to change the initial screen information, which will be stored in the storage unit 40.

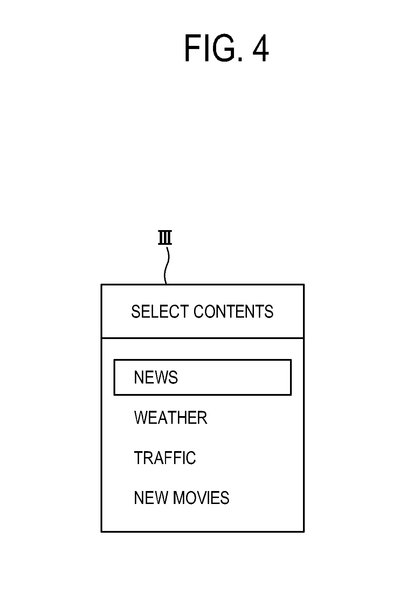

FIGS. 3 and 4 illustrate position changing windows I, II and III according to the first exemplary embodiment of the present invention. If a selection signal is received from a user to change the initial screen A, a first position changing window I providing information and position of each content on the initial screen A is displayed. In the first position changing window I the initial screen A is divided into small areas, which have simple windows a numbered sequentially. Below the simple windows a, content items corresponding to each number of the simple windows a are displayed. As shown therein, a first section 1 which is in an upper left side of the initial screen A displays weather, a second section 2 in an upper right side displays traffic, a third section 3 in a lower left side displays new movies and a fourth section 4 in a lower right side displays news. Thus, a user may easily acquire content information from the initial screen A. A user may select one of the content items by using the user input unit 60 . The user input unit 60 may include a direction key to move between the plurality of items and a selection key to select activated items. Also, a user may select items by using a drag and drop function. If the weather as the first item is selected as shown in FIG. 3, the display unit 30 displays thereon a second position changing window II The second position changing window II is provided to change the position of contents, and includes a "change to other contents" item and an "initialize" item. If a user selects the "change to other contents" item, a third position changing window III as a sub menu window of the second position changing window II is displayed. The third position changing window III displays a list of content items which are able to be displayed in the first section 1. A user may use the direction key and the selection key to display a specific content on the first section 1. As shown therein, if the news is selected, the first section 1 displays contents corresponding to news instead of weather information. A user may reconfigure the initial screen A according to his/her preferences or priority, which will be stored in the storage unit 40. The image processor 20 changes the initial screen A according to the stored initial screen information and displays the changed initial screen A on the display unit 30. If a user accesses the external server 200 again after finishing the access thereto, the image processor 20 displays the initial screen A changed by a user, on the display unit 30. A user may set the changed initial screen A as a default initial screen A according to the present embodiment. Alternatively, a user may set an original initial screen A as a default screen supplied by the external server 200 when the display apparatus 100 is newly connected to the external server 200. That is, the changed initial screen A may be set so that it is displayed only once when the display apparatus 100 is connected to the external server 200.

If a user selects the "initialize" item, the initial screen A is set into a first initial screen A received from the external server 200.

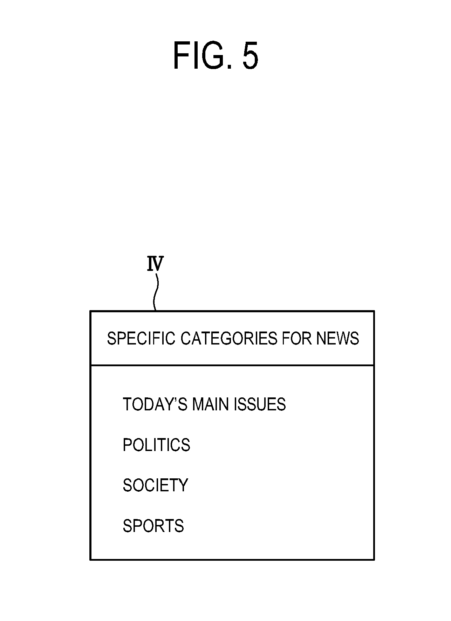

FIG. 5 illustrates a category selecting window IV according to the present embodiment. The category selecting window IV is a menu window to select specific categories for contents. If a user selects news from a third position changing window IV the first section 1 displays news contents. That is, a user may select a specific category through the category selecting window IV to be displayed on the first section 1. The specific categories for the news include Today's main issues, politics, society and sports. A user may select the specific category and set specific information about contents to be displayed on the initial screen A. A user may add or remove specific category items displayed on the category selecting window IV and set a display order of the specific category items.

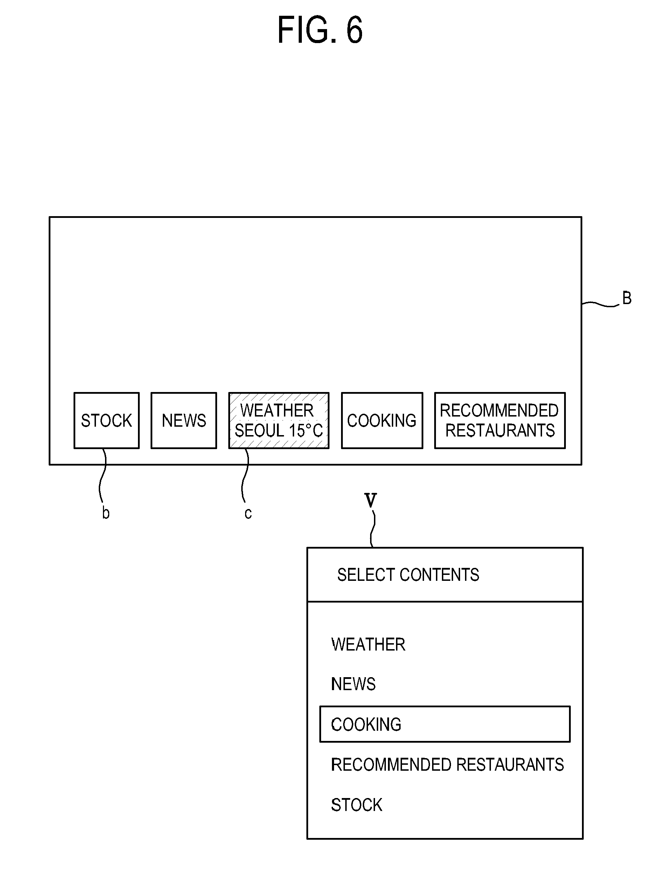

FIG. 6 illustrates an initial screen and a preview selecting window according to a second exemplary embodiment of the present invention. A content initial screen B transmitted from the external server 200 includes content items displayed in a lower part of a display unit 30 instead of on the overall display unit 30. That is, the initial screen B displays only an item b to identify content information rather than displaying content information itself. However, a specific item of the plurality of items b is displayed as a preview window c briefly showing important contents of the content information. A user may select the preview window c to choose a content item to be displayed as the preview window c or may change a position of the preview window c. If the preview window c is selected as shown therein, the display unit 30 displays thereon a preview selecting window V. The preview selecting window V includes a content item list, and a user may select a specific item by using a direction key. If a "cooking" item is selected, the preview window c may display names and main ingredients of dishes supplied by the external server 200. That is, the image processor 20 displays preview information about the selected content item of the content information received through the communication unit 10, on the display unit 30.

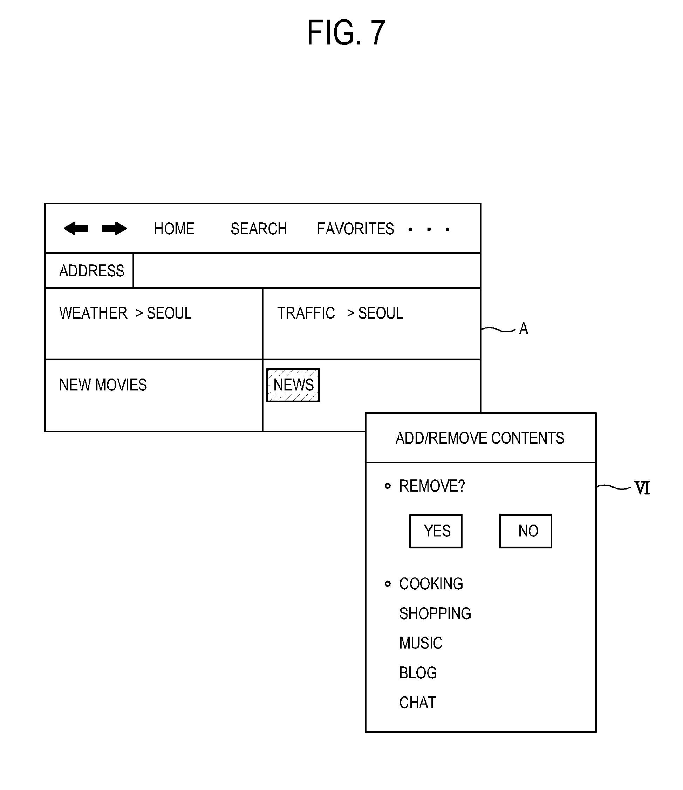

FIG. 7 illustrates a content adding/removing window according to a third exemplary embodiment of the present invention. As shown therein, a content adding/removing window VI includes an item to remove a selected content and an item to select a content category to be added after a content is removed. A user may change the category included in the initial screen A according to his/her preferences. The content category items to be added by a user include contents such as cooking, shopping, music, blogs and chat which are not included in a first initial screen A. A user may add other contents to existing categories instead of removing contents. The display area of the contents may be automatically adjusted or adjusted by a user.

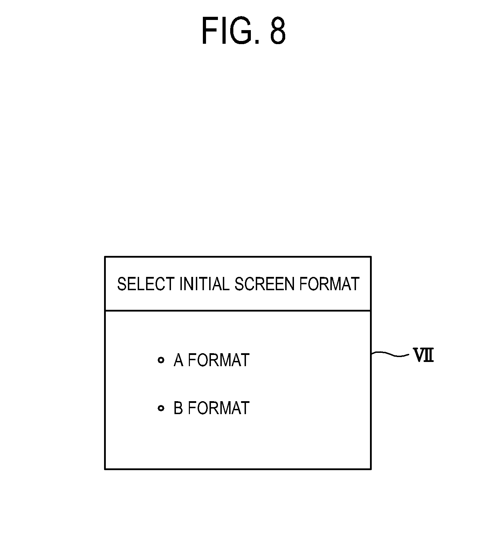

FIG. 8 illustrates an initial screen format window according to a fourth exemplary embodiment of the present invention. As described above, an external server 200 may provide different formats of initial screens A and B. While the initial screen A in FIG. 2 displays contents supplied by the external server 200 on its overall screen, the initial screen B in FIG. 6 displays contents on a lower part thereof. A user may select one of a plurality of formats through an initial screen format window VII. If the display apparatus 100 is connected to the external server 200 after a specific format is selected by a user, an initial screen of the format selected by a user is displayed on the display unit 30.

A user may adjust the size of the initial screen A by using the user input unit 60. If the display apparatus 100 is connected to the external server 200 after the size of the initial screen A is adjusted, the initial screen A may be displayed in the adjusted size on the display unit 30. A user may adjust display areas of contents differently. That is, a user may reduce the size of a first section 1 displaying weather while enlarging a third section 3 displaying new movies. That is, the set or changed size of the initial screen A and display areas of the respective sections are stored in the storage unit 40, and the image processor 20 processes and displays the contents according to stored initial screen information.

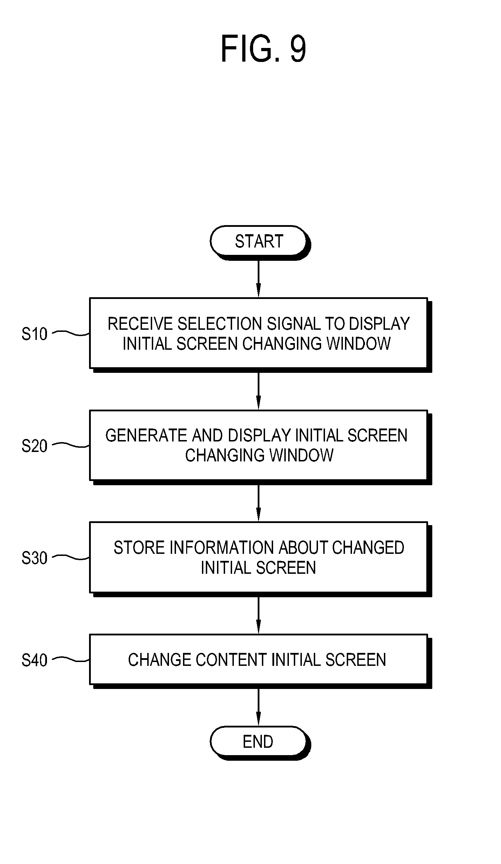

FIG. 9 is a control flowchart to describe a control method of the display apparatus according to the present invention. First, a selection signal to display the initial screen changing window is received through the user input unit 60 (S10).

The controller 70 controls the UI generator 50 to generate the initial screen changing window and displays the initial screen changing window on the display unit 30 (S20).

If a user changes the configuration of the initial screen by using the user input unit 40, the controller 70 stores the changed initial screen information in the storage unit 40 (S30).

The image processor 20 changes the content initial screen based on the stored initial screen information (S40), and displays the changed initial screen on the display unit 30.

The foregoing initial screens A and B are not limited to those described above, and are examples to describe an initial screen of contents supplied by the external server 200. The menu window supplied by the UI generator 50 is not limited to those in the present specification and drawings, and may include various shapes and items.

As described above, the present invention provides a display apparatus which allows a user to easily reconfigure an initial screen of contents displayed on a display unit, and a control method thereof.

Also, the present invention provides a display apparatus which supports UI (user interface) information to reconfigure supplied contents, and a control method thereof.

Although a few exemplary embodiments of the present invention have been shown and described, it will be appreciated by those skilled in the art that changes may be made in these embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus which has a display unit (30), the display apparatus comprising:
a communication unit (10) which receives contents from an external server (200);
a UI, user interface, generator (50) which generates UI information; and
a controller (70) which controls the UI generator (50) to display the UI information relating to setting an initial screen of the contents supplied by the external server (200) on the display unit (30) if the display apparatus is connected to the external server (200).

2. The display apparatus according to claim 1, further comprising a storage unit (40) which stores therein initial screen information changed through the UI information.

3. The display apparatus according to claim 2, further comprising an image processor (20) which changes the content initial screen based on the stored initial screen information.

4. The display apparatus according to any preceding claim, wherein the UI information comprises a position changing window (I,II,III) to change a display position of the contents.

5. The display apparatus according to any preceding claim, wherein the UI information comprises a category selecting window (IV) to select a specific category of the content to be displayed.

6. The display apparatus according to any preceding claim, wherein the external server (200) supplies a preview window (c) with respect to the contents, and
the UI information comprises a preview selecting window (V) to select contents displayed in the preview window (c).

7. The display apparatus according to any preceding claim, wherein the UI information comprises a content adding/removing window (VI) to add or remove contents displayed on the content initial screen.

8. The display apparatus according to any preceding claim, wherein if a plurality of content initial screens having different formats is supplied from the external server (200), the content initial screens comprise an initial screen format window (VII) to select one of the formats.

9. The display apparatus according to claim 3, further comprising a user input unit (60) to set the content initial screen, wherein
the image processor (20) changes a size of the content initial screen according to a control signal if the control signal is outputted through the user input unit (60) to change the size of the content initial screen.

10. The display apparatus according to claim 9, wherein the image processor (20) changes a display area of the contents according to a control signal if the control signal is outputted through the user input unit (60) to change the display area of the contents.

11. A control method of a display apparatus which receives contents from an external server (200), the control method comprising:
receiving a control signal to display an initial screen changing window changing a content initial screen;
displaying the initial screen changing window;
storing changed initial screen information; and
changing the content initial screen based on initial screen information.
